# FASCICULE DE BREVET EUROPEEN

(11) **EP 1 598 994 B1**
(45) Date de publication et mention de la délivrance du brevet: **24.10.2007**
(21) Numéro de dépôt: 05104061.6
(22) Date de dépôt: 16.05.2005
(51) Int. Cl.: H04L 12/56

(54) **Génération et mise à jour d'une arborescence hiérarchisée dans un réseau de communications ad hoc à protocole de routage multicast de type MANET**
Generierung und Aktualisierung einer Baumhierarchie in einem ad hoc Kommunikationsnetz mit einem MANET Mehrfachsende-Leitweglenkungsprotokoll
Generating and updating a hierarchical tree structure in an ad-hoc communication network with a MANET multicast routing protocol.

(30) Priorité: 18.05.2004 FR 0450983
(43) Date de publication de la demande: 23.11.2005
(73) Titulaire: Alcatel Lucent, 75008 Paris (FR)
(72) Inventeur: Preguica, Christophe, 91300 Massy (FR)
(74) Mandataire: Chaffraix, Sylvain

(56) Documents cités:
- WO-A-02/23832
- ROYER E M ET AL: "MULTICAST OPERATION OF THE AD-HOC ON-DEMAND DISTANCE VECTOR ROUTINGPROTOCOL" MOBICOM '99. PROCEEDINGS OF THE 5TH ANNUAL ACM/IEEE INTERNATIONAL CONFERENCE ON MOBILE COMPUTING AND NETWORKING. SEATTLE, WA, AUG. 15 - 20, 1999, ANNUAL ACM/IEEE INTERNATIONAL CONFERENCE ON MOBILE COMPUTING AND NETWORKING, NEW YORK, NY : ACM, US, vol. CONF. 5, 15 août 1999 (1999-08-15), pages 207-218, XP000896087 ISBN: 1-58113-142-9
- DEVARAPALLI V ET AL: "MZR: a multicast protocol for mobile ad hoe networks" ICC 2001. 2001 IEEE INTERNATIONAL CONFERENCE ON COMMUNICATIONS. CONFERENCE RECORD. HELSINKY, FINLAND, JUNE 11 - 14, 2001, IEEE INTERNATIONAL CONFERENCE ON COMMUNICATIONS, NEW YORK, NY : IEEE, US, vol. VOL. 1 OF 10, 11 juin 2001 (2001-06-11), pages 886-891, XP010553128 ISBN: 0-7803-7097-1

## Description

L'invention concerne le domaine des réseaux de communications ad hoc à protocole de routage de type MANET (pour « Mobile Ad hoc NETwork »), et plus précisément la génération d'arborescences hiérarchisées au sein de tels réseaux.

Comme le sait l'homme de l'art, les protocoles de routage de type point à multipoints (ou « multicast ») ayant été initialement conçus pour les réseaux filaires, ils sont mal adaptés (voire pas du tout adaptés) aux réseaux ad hoc.

Afin de permettre l'utilisation d'un routage multicast dans les réseaux ad hoc, plusieurs protocoles ont donc été proposés. Ces protocoles reposent soit sur un routage maillé (ou « mesh-based »), soit sur un routage arborescent (ou « tree-based »).

Le routage multicast maillé consiste à définir plusieurs chemins entre chaque routeur source d'un réseau et des routeurs récepteurs. Ce mode de routage est relativement bien adapté à la mobilité des équipements de réseau dans la mesure où il permet la transmission de paquets de données lorsqu'un lien entre deux routeurs est interrompu. Il présente l'avantage de nécessiter peu d'échanges de paquets de contrôle pour la génération et la mise à jour du maillage. Cependant, il n'optimise pas l'utilisation de la bande passante au sein du réseau, et ne facilite pas les montées en charge du réseau.

Le routage multicast arborescent consiste à définir un unique chemin de routage optimal entre un routeur source et des routeurs récepteurs. Il repose sur la génération et la mise à jour d'arborescences au moyen de mécanismes (ou procédés) tels que AMRIS, MAODV, LAM et LGT.

Un protocole de routage de type MANET peut être de type réactif (c'est-à-dire lorsque le routeur doit demander un chemin en cas de besoin, du fait qu'il ne connaît pas la topologie du réseau), ou proactif (lorsque chaque routeur peut calculer un chemin en cas de besoin, du fait qu'il connaît la topologie du réseau).

AMRIS (« Ad hoc Multicast Routing protocol utilizing Increased ID numberS ») est un procédé nécessitant une quantité importante de paquets de contrôle pour la génération et la mise à jour d'arborescences, et n'est par conséquent pas bien adapté à la mobilité des équipements de réseau. Un temps important est en effet nécessaire à la reconstruction d'une arborescence lorsque des routeurs se déplacent. En outre pendant la phase de reconstruction d'une arborescence les paquets de données sont perdus.

MAODV (« Multicast Ad hoc On-Demand Distance Vector ») est par exemple décrit dans l'article « Multicast Operation of the Ad-hoc On-Demand Distance Vector Routing Protocol » d'Elizabeth M. Royer et Chartes E. Perkins, paru le 15 août 1999, dans Mobicom'99, Proceedings of the 5th annual ACM/IEEE International Conférence on Mobile Computing and Networking. Il s'agit d'un procédé principalement destiné à fonctionner avec le protocole AODV qui est un protocole MANET de type réactif. Il utilise la diffusion (ou « broadcasting ») de paquets de contrôle pour signaler chaque déplacement de routeur, ce qui surcharge le réseau ad hoc.

LAM (« Lightweight Adaptive Multicast ») est un procédé générant des arborescences multicast partagées, ce qui ne fournit pas des chemins aussi optimisés que dans le cas d'une arborescence multicast classique. En outre, comme AMRIS il nécessite une quantité importante de paquets de contrôle pour la génération et la mise à jour des arborescences.

LGT (« Location Guided Tree ») est un procédé reposant sur une arborescence de distribution multicast de recouvrement placée au-dessus d'un protocole de routage point à point (ou « unicast ») sous-jacent. Les données multicast sont par conséquent encapsulées dans des paquets unicast, ce qui est particulièrement coûteux en terme de bande passante.

WO-A-02/23832 décrit un protocole de routage utilisé dans un réseau mobile ad hoc pour disséminer des informations topologiques dans tout le réseau.

Aucun procédé de génération d'arborescence n'étant entièrement satisfaisant dans les réseaux ad hoc, l'invention a donc pour but d'améliorer la situation.

Elle propose à cet effet un procédé dédié à la génération et la mise à jour d'une arborescence hiérarchisée de type « fils/père » dans un réseau de communications ad hoc à protocole de routage proactif multicast de type MANET, et consistant lorsqu'un routeur « fils » du réseau veut faire partie d'une arborescence hiérarchisée associée à un routeur source, à associer ce routeur fils à un routeur « père » voisin (du réseau) en lui faisant transmettre au routeur père voisin, en mode unicast, une demande de participation (ou « join ») désignant le routeur source.

Lorsque le routeur père voisin reçoit la demande de participation deux cas peuvent alors survenir :
a) soit il est déjà associé à un autre routeur fils du réseau, et dans ce cas on l'associe au routeur fils demandeur, de manière à le faire participer à l'arborescence préexistante, et on incrémente d'une unité la valeur de l'une de ses informations d'état, représentative du nombre de routeurs fils qui lui sont associés,
b) soit il n'est pas encore associé à un routeur fils du réseau, et dans ce cas on l'associe au routeur fils demandeur et on place à la valeur « un » son information d'état, puis on lui fait transmettre en mode unicast à un autre routeur voisin du réseau, qui constitue alors son père, une demande de participation désignant le routeur source, puis
c) on réitère l'opération a) ou l'opération b) avec le routeur père voisin récepteur d'une demande de participation selon qu'il est ou n'est pas lui-même déjà associé à un autre routeur fils du réseau.

Selon une autre caractéristique de l'invention, lorsqu'un routeur ne souhaite plus participer à une arborescence, du fait qu'il n'est plus associé à un routeur fils, ce routeur peut transmettre à son routeur père voisin une demande de retrait (ou « prune ») en mode unicast.

Lorsque le routeur père voisin reçoit la demande de retrait deux cas peuvent alors survenir :
i. soit il est associé à au moins deux routeurs fils du réseau, et dans ce cas on désassocie le routeur demandeur du routeur père voisin, de sorte qu'il ne participe plus à l'arborescence, et on décrémente d'une unité la valeur de son information d'état représentative du nombre de routeurs fils qui lui sont associés,
ii. soit il n'est associé qu'au routeur fils demandeur, et dans ce cas on le désassocie du routeur fils demandeur et on place à la valeur « zéro » son information d'état, puis on lui fait transmettre en mode unicast à son propre routeur père voisin, une demande de retrait de l'arborescence en mode unicast, puis
iii. on réitère l'opération i) ou l'opération ii) avec le routeur père voisin récepteur d'une demande de retrait selon qu'il est lui-même associé à au moins deux routeurs fils ou à un seul routeur fils.

Selon encore une autre caractéristique de l'invention, lorsqu'un lien, matérialisant une association entre un routeur père et un routeur fils, est interrompu, le routeur fils peut transmettre, en mode unicast, une demande de participation (désignant le routeur source) à un autre routeur voisin du réseau, de manière à lui être associé, ce routeur voisin constituant alors un nouveau routeur père voisin pour le routeur fils.

Lorsque le nouveau routeur père voisin reçoit la demande de retrait deux cas peuvent alors survenir :
I) soit il est déjà associé à un autre routeur fils du réseau, et dans ce cas on l'associe au routeur fils demandeur, de manière à le faire participer à l'arborescence, et on incrémente d'une unité la valeur de son information d'état représentative du nombre de routeurs fils qui lui sont associés,
II) soit il n'est pas déjà associé à un autre routeur fils du réseau, et dans ce cas on l'associe au routeur fils demandeur et on place à la valeur « un » son information d'état, puis on lui fait transmettre, en mode unicast, à un autre routeur voisin du réseau, qui constitue alors son père, une demande de participation désignant le routeur source, puis
III) on réitère l'opération I) ou l'opération II) avec le routeur père voisin récepteur d'une demande de participation selon qu'il est ou n'est pas lui-même déjà associé à un autre routeur fils du réseau.

Par exemple, lorsque le lien, qui matérialise une association entre un routeur père et un routeur fils, est interrompu, le routeur père peut transmettre, en mode unicast, une demande de retrait de l'arborescence à son routeur père voisin. Dans ce cas, il est en outre avantageux de compter au niveau du routeur père le temps qui s'écoule depuis le début d'une interruption de lien, de manière à ne transmettre la demande de retrait qu'à condition qu'une première durée choisie se soit écoulée.

Selon encore une autre caractéristique de l'invention, on peut analyser au niveau de chaque routeur d'une arborescence l'intensité des signaux qui proviennent de son routeur père et de chacun de ses routeurs fils, puis comparer ces intensités à un seuil choisi. Ainsi, lorsqu'un routeur fils détecte une intensité inférieure au seuil sur le lien avec son routeur père voisin, il est autorisé à transmettre à un routeur voisin différent de son routeur père voisin une demande de participation à l'arborescence. Dans ce cas, il est en outre avantageux de compter au niveau du routeur fils le temps écoulé depuis le début d'une détection d'intensité inférieure au seuil, de manière à ne l'autoriser à transmettre sa demande de participation qu'à condition qu'une seconde durée choisie se soit écoulée.

Par ailleurs, les demandes de participation (« join ») et/ou les demandes de retrait (« prune ») comportent chacune préférentiellement une adresse de type « unicast » désignant le routeur source et une adresse de groupe de type « multicast ».

L'invention est particulièrement bien adaptée, bien que de façon non exclusive, aux réseaux mettant en oeuvre un protocole de routage proactif multicast de type MANET choisi parmi TBRPF (« Topology-Based and dissémination with Reverse Path Forwarding ») et OLSR (« Optimized Link State Routing »).

D'autres caractéristiques et avantages de l'invention apparaitront à l'examen de la description détaillée ci-après, et des dessins annexés, sur lesquels :
- les figures 1A à 1E illustrent de façon schématique cinq phases successives d'élaboration d'un exemple arborescence hiérarchisée selon l'invention, entre un premier routeur récepteur et une source,
- les figures 2A et 2B illustrent de façon schématique les deux phases successives permettant à un second routeur récepteur de se joindre à l'exemple d'arborescence hiérarchisée de la figure 1 E,
- les figures 3A à 3F illustrent de façon schématique les six phases successives permettant de détruire l'exemple d'arborescence hiérarchisée de la figure 2B, et
- les figures 4A et 4B illustrent de façon schématique les deux phases successives permettant un rétablissement, selon l'invention, d'une arborescence hiérarchisée en cas d'interruption d'un lien dans l'exemple d'arborescence hiérarchisée de la figure 1 E.

Les dessins annexés pourront non seulement servir à compléter l'invention, mais aussi contribuer à sa définition, le cas échéant.

L'invention a pour objet de permettre la génération et la mise à jour d'une arborescence hiérarchisée de type « fils/père » dans un réseau de communications ad hoc à protocole de routage proactif multicast de type MANET.

Dans ce qui suit, on considère, à titre d'exemple illustratif, que le réseau ad hoc utilise un protocole de routage proactif multicast, tel que TBRPF (Topology-Based and dissemination with Reverse Path Forwarding) ou OLSR (Optimized Link State Routing). Mais, l'invention n'est pas limitée à ces exemples de protocole de routage proactif multicast.

Comme cela est schématiquement illustré sur la figure 1A, un réseau ad hoc multicast peut être assimilé à au moins un groupe G de routeurs comportant un routeur source RS et des routeurs R_{NA} qui, tant qu'une arborescence hiérarchisée n'a pas été instaurée, ne sont pas liés deux à deux selon une hiérarchie de type « père/fils ». Les liens potentiels entre routeurs n'appartenant pas à une arborescence hiérarchisée sont matérialisés sur les figures par des traits noirs, simples et larges.

Parmi ces routeurs R_{NA}, certains peuvent être momentanément connectés à un équipement de réseau H, de type « host », appartenant par exemple à un client abonné au réseau ad hoc. Ces routeurs, appelés routeurs récepteurs RR, sont généralement les plus éloignés du routeur source RS en terme de hiérarchie. Les autres routeurs sont en général situés entre les routeurs récepteurs RR et le routeur source RS en terme de hiérarchie.

Pour qu'un host H puisse échanger des données avec le routeur source RS, du groupe G auquel il appartient, un chemin optimal de routage doit être défini entre ledit routeur source RS et le routeur récepteur RR1 auquel il est connecté.

Dans un réseau à protocole de routage proactif multicast, chaque routeur connaît la topologie du réseau, si bien qu'il est capable de déterminer le chemin de routage le plus court (ou chemin optimal) pour transmettre des données au routeur source RS. Par conséquent, chaque routeur est capable de déterminer le routeur voisin qui est placé au-dessus de lui dans la hiérarchie et auquel il devra transmettre des données reçues en vue de leur acheminement jusqu'au routeur source RS. Le routeur qui est le moins bien placé des deux hiérarchiquement est appelé routeur fils, tandis que son routeur voisin est appelé routeur père (voisin).

Le procédé selon l'invention est notamment destiné à permettre la génération d'une arborescence hiérarchisée au sein d'un réseau ad hoc.

Plus précisément, le procédé consiste, lorsqu'un routeur fils (par exemple RR1), appartenant à un groupe G, veut faire partie d'une arborescence hiérarchisée associée à un routeur source RS de ce groupe G, à l'associer à un routeur père voisin (ici R1_{NA}) en lui faisant transmettre à ce dernier, en mode unicast, une demande de participation (ou « join »), matérialisée sur la figure 1A par une flèche épaisse, et désignant notamment le routeur source RS.

Chaque demande de participation comporte préférentiellement l'adresse unicast désignant le routeur source RS et l'adresse multicast du groupe G.

Lorsque le routeur père R1_{NA} reçoit la demande de participation transmise par le routeur fils RR1, deux cas peuvent survenir.

Si le routeur père est déjà associé à un autre routeur fils du groupe G, cela veut dire qu'une arborescence existe déjà et qu'il en fait partie (on le note alors R_{A}). Par exemple, chaque routeur R_{A} appartenant à une arborescence du groupe G est associé à un état défini par un triplet comprenant l'adresse unicast S désignant le routeur source RS, l'adresse multicast G du groupe, et une information d'état dont la valeur représente le nombre de routeurs fils qui lui sont associés. Dans ce premier cas, on associe le routeur père (R1_{NA}) au routeur fils demandeur (RR1), afin de le faire participer à l'arborescence préexistante, et on incrémente d'une unité la valeur de l'information d'état de son triplet.

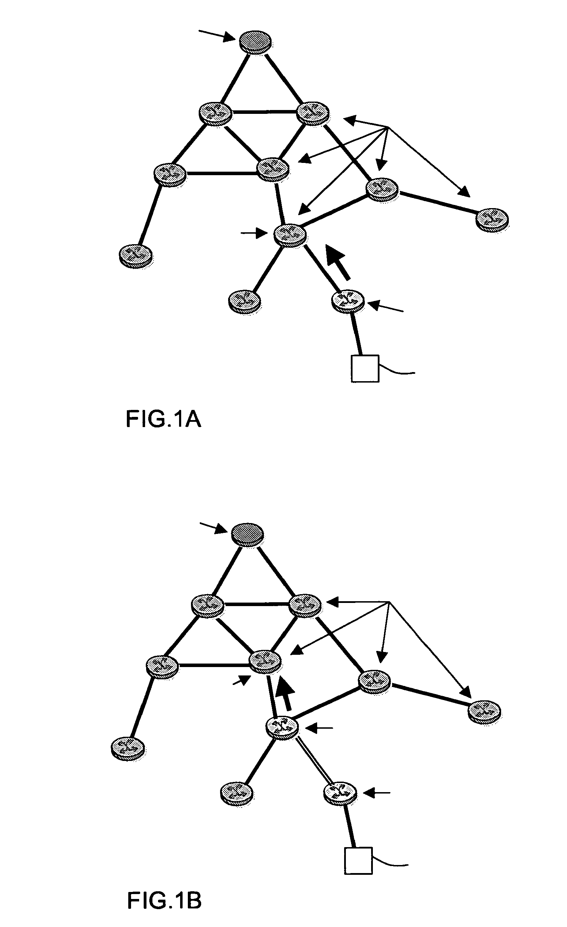

En revanche, si le routeur père (R1_{NA}) n'est pas encore associé à un routeur fils du groupe G, aucun état ne lui est associé. Cette situation est illustrée sur la figure 1A. Dans ce deuxième cas, on associe le routeur père (R1_{NA}) au routeur fils demandeur (RR1), ce qui est matérialisé sur la figure 1 B par un double trait, et on constitue son triplet avec l'adresse unicast S désignant le routeur source RS et l'adresse multicast G du groupe, contenues dans la demande de participation reçue, ainsi qu'avec la valeur de l'information d'état égale à un (1).

Le routeur père disposant désormais d'un état, il est considéré comme appartenant à l'arborescence en construction et est désormais appelé R1_{A}. On lui fait alors transmettre en mode unicast à son routeur père voisin R2_{NA} une demande de participation désignant le routeur source RS afin de poursuivre la construction de l'arborescence hiérarchisée en direction du routeur source RS. Cette transmission est matérialisée sur la figure 1 B par une flèche épaisse.

Lorsque le routeur père R2_{NA} reçoit la demande de participation transmise par le routeur fils R1_{A}, les deux cas précités peuvent de nouveau survenir.

Si il est déjà associé à un autre routeur fils du groupe G, on l'associe au routeur fils demandeur R1_{A}, afin de le faire participer à l'arborescence préexistante, et on incrémente d'une unité la valeur de l'information d'état de son triplet.

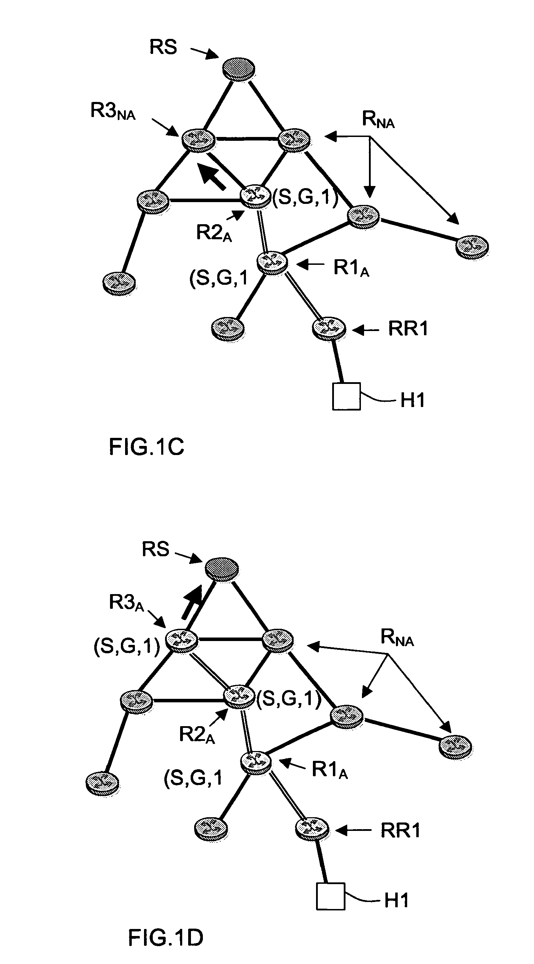

En revanche, si il n'est pas encore associé à un routeur fils du groupe G, on l'associe au routeur fils demandeur R1_{A}, ce qui est matérialisé sur la figure 1C par un double trait, et on constitue son triplet avec l'adresse unicast S désignant le routeur source RS et l'adresse multicast G du groupe, contenues dans la demande de participation reçue, ainsi qu'avec la valeur de l'information d'état égale à un (1). Le routeur père disposant désormais d'un état il est considéré comme appartenant à l'arborescence en construction et est maintenant appelé R2_{A}. On lui fait ensuite transmettre en mode unicast à son routeur père voisin R3_{NA} une demande de participation désignant le routeur source RS afin de poursuivre la construction de l'arborescence hiérarchisée. Cette transmission est matérialisée sur la figure 1C par une flèche épaisse.

Ce mécanisme de génération de l'arborescence se poursuit tant que l'on n'est pas parvenu au niveau du routeur source RS. C'est notamment le cas de l'exemple illustré. En effet, dans cet exemple le routeur père voisin R3_{NA} n'est pas encore associé à un routeur fils du groupe G. Par conséquent, on l'associe au routeur fils demandeur R2_{A}, ce qui est matérialisé sur la figure 1 D par un double trait, et on constitue son triplet avec l'adresse unicast S désignant le routeur source RS et l'adresse multicast G du groupe, contenues dans la demande de participation reçue, ainsi qu'avec la valeur de l'information d'état égale à un (1). Le routeur père disposant désormais d'un état il est considéré comme appartenant à l'arborescence en construction et est maintenant appelé R3_{A}. On lui fait ensuite transmettre en mode unicast à son routeur père voisin, qui est ici le routeur source RS, une demande de participation qui le désigne afin d'achever la construction de l'arborescence hiérarchisée. Cette transmission est matérialisée sur la figure 1 D par une flèche épaisse.

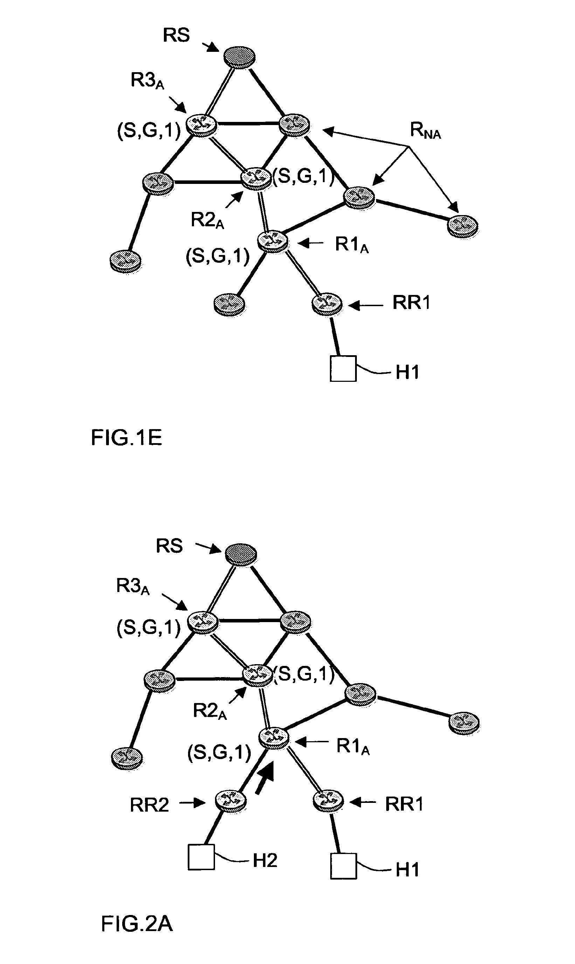

Lorsque le routeur source RS reçoit du routeur R3_{A} (qui devient alors son fils) la demande de participation qui le désigne, on les associe tous les deux, ce qui est matérialisé sur la figure 1E par un double trait. L'arborescence hiérarchisée est alors établie entre le routeur récepteur RR1 et le routeur source RS.

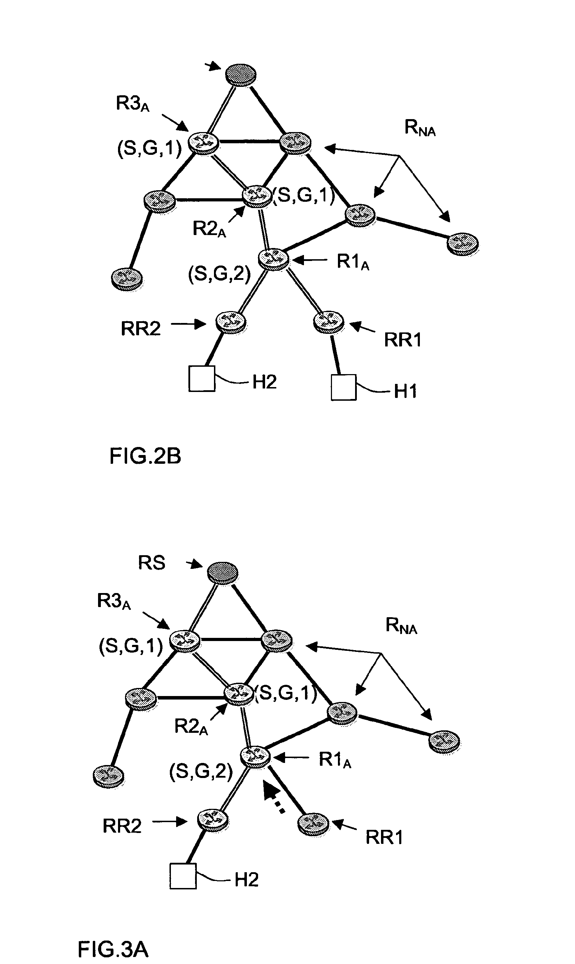

Comme cela est illustré sur les figures 2A et 2B, d'autres routeurs récepteurs RR peuvent se joindre à l'arborescence hiérarchisée établie.

Plus précisément, dans l'exemple illustré sur la figure 2A, un second routeur récepteur RR2, appartenant au groupe G, a reçu d'un second host H2, auquel il est connecté, une demande de réception du trafic issu du routeur source RS. Ce second routeur récepteur RR2 n'étant pas ici rattaché à une arborescence hiérarchisée du groupe G, il transmet alors une demande de participation, en mode unicast, à son routeur père voisin, lequel est ici le routeur R1_{A}. Cette transmission est matérialisée sur la figure 2A par une flèche épaisse.

Le routeur R1_{A} étant déjà associé au routeur fils RR1 du groupe G, on l'associe également au routeur fils demandeur RR2, afin de le faire participer à l'arborescence préexistante, ce qui est matérialisé sur la figure 2B par un double trait, et on incrémente d'une unité la valeur de l'information d'état de son triplet, elle devient alors égale à deux (2). L'arborescence hiérarchisée est ainsi augmentée.

Le procédé selon l'invention permet également de supprimer une arborescence hiérarchisée.

Plus précisément, lorsqu'un routeur n'a plus besoin de participer à une arborescence, du fait qu'il n'est plus associé à un routeur fils, ce routeur transmet à son routeur père voisin une demande de retrait (ou « prune ») en mode unicast.

Chaque demande de retrait comporte préférentiellement l'adresse unicast désignant le routeur source RS et l'adresse multicast du groupe G.

La suppression d'une arborescence va maintenant être décrite en détail au moyen d'un exemple illustré sur les figures 3A à 3F. Cet exemple part de l'arborescence hiérarchisée illustrée sur la figure 2B.

Lorsque le routeur père, ici R1_{A}, reçoit la demande de retrait transmise par son routeur fils, ici RR1, matérialisée sur la figure 3A par une flèche épaisse en pointillés, deux cas peuvent survenir.

Si le routeur père R1_{A} est associé à au moins deux routeurs fils du groupe G, comme illustré sur la figure 3A, on le désassocie du routeur récepteur demandeur RR1, de sorte que ce dernier ne participe plus à l'arborescence, et on décrémente d'une unité la valeur de son information d'état représentative du nombre de routeurs fils qui lui sont associés. Dans cet exemple, la valeur de son information d'état devient alors égale à un (1).

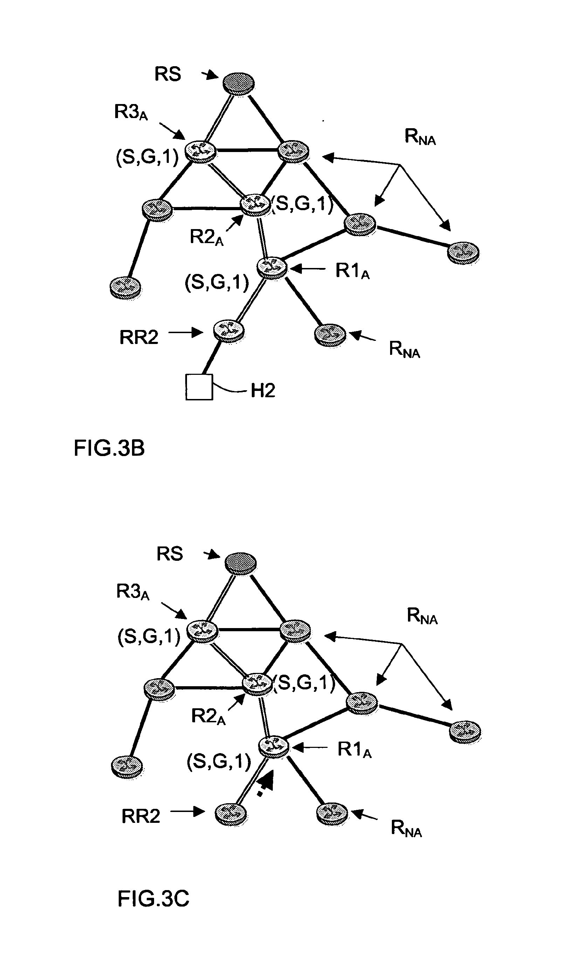

Si le routeur père R1_{A} n'est associé qu'au routeur récepteur fils demandeur RR1, on le désassocie de ce dernier et on place à la valeur « zéro » (0) son information d'état (qui était précédemment égale à un). Puis, étant donné que le routeur père R1_{A} n'est plus associé à un routeur fils (il ne possède en effet plus d'état (ou triplet)), on lui fait transmettre en mode unicast, à son propre routeur père voisin R2_{A}, une demande de retrait de l'arborescence en mode unicast. Le routeur père R1_{A} redevient alors le routeur R1_{NA}. La transmission de la demande de retrait est matérialisée sur la figure 3B par une flèche épaisse en pointillés.

Lorsque le routeur père voisin R2_{A} reçoit la demande de participation transmise par son routeur fils R1_{NA}, les deux cas précités peuvent de nouveau survenir.

Si il est associé à au moins deux routeurs fils du groupe G, on le désassocie du routeur fils demandeur R1_{NA}, afin qu'il ne participe plus à l'arborescence, et on décrémente d'une unité la valeur de l'information d'état de son triplet.

En revanche, si il n'est associé qu'au routeur fils R1_{NA} du groupe G, on le désassocie de ce dernier, et on décrémente d'une unité la valeur de l'information d'état de son triplet, laquelle est alors égale à zéro (0). Puis, étant donné que le routeur père R2_{A} n'est plus associé à un routeur fils (il ne possède en effet plus d'état (ou triplet)), on lui fait transmettre en mode unicast, à son propre routeur père voisin R3_{A}, une demande de retrait de l'arborescence en mode unicast. Le routeur père R2_{A} redevient alors le routeur R2_{NA}.

Les deux cas se présentent alors de nouveau au niveau du routeur père N3_{A}. Le procédé se poursuit alors, éventuellement jusqu'au routeur source RS et donc jusqu'à suppression totale de l'arborescence hiérarchisée précédemment créée, ou bien elle s'interrompt en laissant perdurer une arborescence hiérarchisée « réduite ».

Dans l'exemple illustré sur la figure 3B, le routeur père R1_{A} dispose encore d'un état après avoir été dissocié de son routeur récepteur fils RR1. Du fait qu'il est encore associé à un routeur fils (RR2), il n'a donc pas besoin de transmettre de demande de retrait à son routeur père R2_{A}.

Comme cela est illustré sur la figure 3C, la suppression de l'arborescence peut être réellement initiée lorsque le routeur père R1_{A} reçoit une demande de retrait transmise par son dernier routeur fils, ici RR2, matérialisée par une flèche épaisse en pointillés.

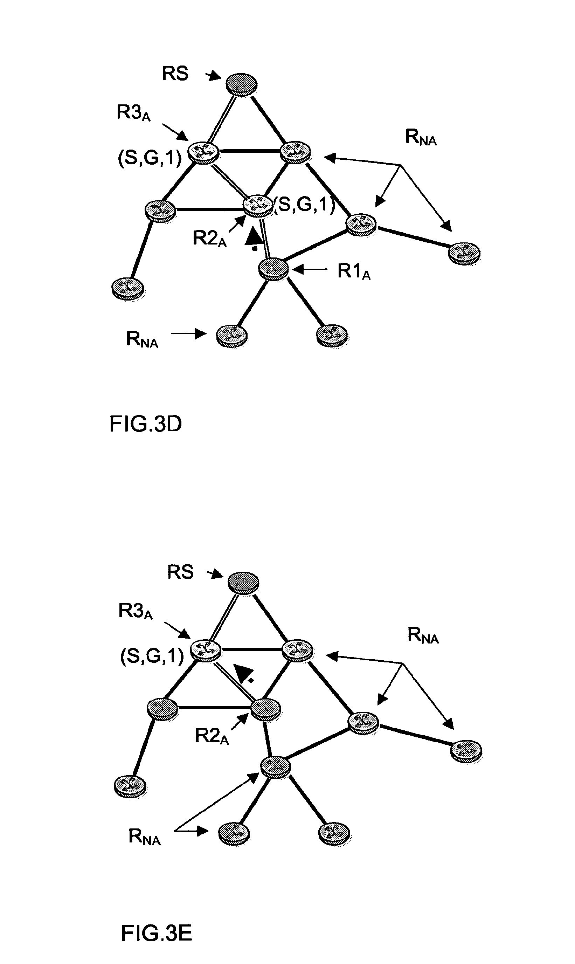

Dans cet exemple, le routeur père R1_{A} est désassocié de son routeur récepteur fils RR2 et on place à la valeur « zéro » (0) son information d'état (qui était précédemment égale à un). Puis, étant donné que le routeur père R1_{A} n'est plus associé à un routeur fils (il ne possède en effet plus d'état (ou triplet)), on lui fait transmettre en mode unicast à son propre routeur père voisin R2_{A}, une demande de retrait de l'arborescence en mode unicast. Le routeur père R1_{A} redevient alors le routeur R1_{NA}. La transmission de la demande de retrait est matérialisée sur la figure 3D par une flèche épaisse en pointillés.

Le routeur père R2_{A} n'étant plus (ici) associé à un routeur fils (il ne possède en effet plus d'état (ou triplet)), on lui fait transmettre en mode unicast à son propre routeur père voisin R3_{A}, une demande de retrait de l'arborescence en mode unicast. Le routeur père R2_{A} redevient alors le routeur R2_{NA}. La transmission de la demande de retrait est matérialisée sur la figure 3E par une flèche épaisse en pointillés.

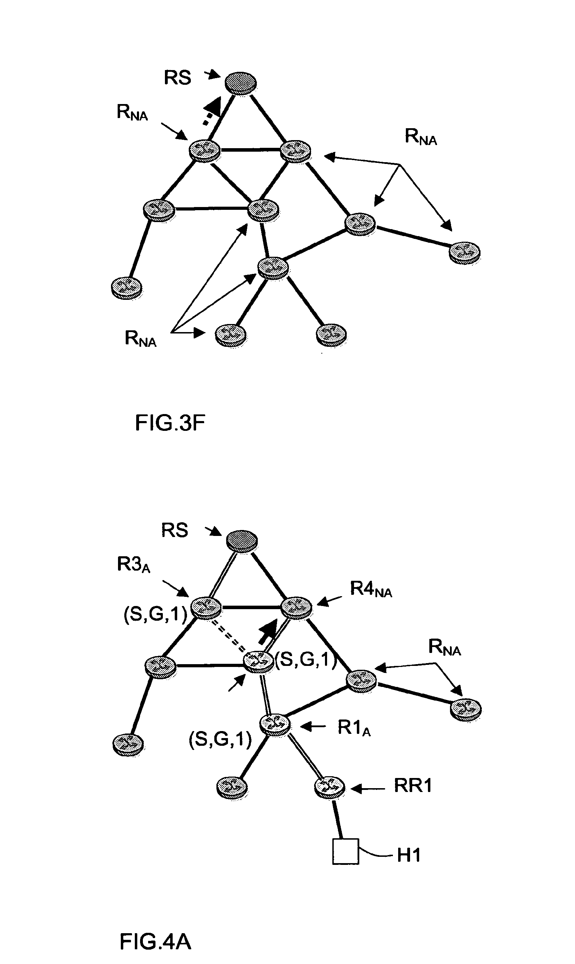

Le routeur père R3_{A} est alors désassocié de son routeur fils R2_{NA} et on place à la valeur « zéro » (0) son information d'état (qui était précédemment égale à un). Puis, étant donné que le routeur père R3_{A} n'est plus associé à un routeur fils (il ne possède en effet plus d'état (ou triplet)), on lui fait transmettre en mode unicast à son propre routeur père voisin, qui est ici le routeur source RS, une demande de retrait de l'arborescence en mode unicast. Le routeur père R3_{A} redevient alors le routeur R3_{NA}. La transmission de la demande de retrait est matérialisée sur la figure 3F par une flèche épaisse en pointillés.

Le routeur source RS n'étant plus associé à un routeur fils, l'arborescence hiérarchisée n'existe donc plus.

Le procédé selon l'invention permet également de reformer une arborescence hiérarchisée lorsque l'un au moins des liens établis entre deux routeurs est interrompu. Il s'agit en fait de conserver la partie « inférieure » d'une arborescence hiérarchisée, contenant un ou plusieurs routeurs récepteurs RR, et de la lier à une partie « supérieure » au moins partiellement nouvelle, contenant le routeur source RS.

Selon l'invention, lorsqu'un lien, matérialisant une association entre un routeur père et un routeur fils, est interrompu, le routeur fils transmet, en mode unicast, une demande de participation (désignant le routeur source RS) à un autre routeur voisin du groupe G, de manière à lui être associé, ce routeur voisin constituant alors un nouveau routeur père voisin pour le routeur fils.

Lorsque le nouveau routeur père voisin reçoit la demande de retrait deux cas peuvent alors survenir.

Si il est déjà associé à un autre routeur fils du groupe G, on l'associe au routeur fils demandeur, afin de le faire participer à l'arborescence, et on incrémente d'une unité la valeur de son information d'état (représentative du nombre de routeurs fils qui lui sont associés).

En revanche, si il n'est pas déjà associé à un autre routeur fils du réseau, on l'associe au routeur fils demandeur et on place à la valeur « un » son information d'état, puis on lui fait transmettre, en mode unicast, à un autre routeur voisin du réseau, qui constitue alors son père, une demande de participation désignant le routeur source.

Les deux cas précités se présentent alors de nouveau, de sorte que l'on réitère l'un ou l'autre des ensembles d'opérations correspondants selon que le routeur père voisin récepteur d'une demande de participation est ou n'est pas lui-même déjà associé à un autre routeur fils du réseau.

Ces opérations de transmission de demande de retrait se poursuivent jusqu'à ce que l'on ait rejoint le routeur source RS. L'intégralité d'une partie supérieure d'arborescence peut être ainsi reconstituée. Mais, on peut également n'avoir à recréer que deux liaisons pour se greffer à l'ancienne partie supérieure, ou à une partie d'extrémité de celle-ci, contenant le routeur source RS.

Dans l'exemple illustré sur la figure 4A, l'arborescence (initialement identique à celle illustrée sur la figure 1 E) comporte un lien interrompu entre les routeurs R2_{A} et R3_{A}.

Le routeur fils R2_{A} doit alors déterminer un nouveau routeur père, ici R4_{NA}, qui n'est pas encore associé à un routeur fils et donc ne possède pas d'état (ou triplet). Le routeur fils R2_{A} transmet alors, en mode unicast, une demande de participation (désignant le routeur source RS) au routeur voisin R4_{NA}, de manière à lui être associé. Cette transmission est matérialisée sur la figure 4A par une flèche épaisse.

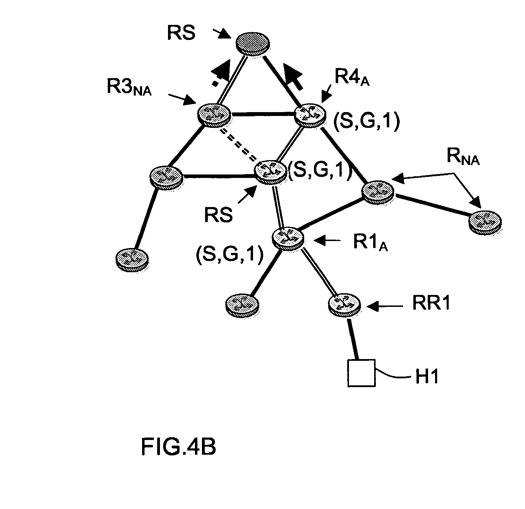

Lorsque le routeur père voisin R4_{NA} reçoit la demande de retrait, on l'associe au routeur fils demandeur R3_{A} et on place à la valeur un (1) son information d'état. Le nouveau routeur père R4_{A} devient alors le routeur R4_{A}. Puis, on lui fait transmettre, en mode unicast, à un routeur voisin du groupe G (ici RS), qui constitue alors son père, une demande de participation désignant le routeur source RS. Cette transmission est matérialisée sur la figure 4B par une flèche épaisse. Le routeur père voisin, qui est ici le routeur source RS, est alors associé au routeur fils R4_{A}.

Le routeur père voisin, étant ici le routeur source RS, la partie supérieure de l'arborescence a donc été reconstituée si bien qu'une arborescence hiérarchisée est reformée.

Le routeur R3_{A} n'étant plus ici associé à un routeur fils, et étant associé au routeur source RS par un lien constituant l'ancienne partie supérieure, devenue sans objet, il est préférable de supprimer cette ancienne partie supérieure de l'arborescence reformée. Bien entendu, une telle suppression n'a pas lieu d'être lorsque le routeur père est encore associé à au moins un routeur fils malgré l'interruption de lien. Mais, chaque fois qu'un routeur ne possède plus de fils, il doit se retirer de l'arborescence reformée en transmettant une demande de retrait à son routeur père.

Ainsi, dans l'exemple illustré, le routeur R3_{A} transmet au routeur source RS (son père) une demande de retrait de l'arborescence. Cette transmission est matérialisée sur la figure 4B par une flèche en pointillés.

Il est avantageux cependant que le routeur père, dont le lien est interrompu avec son seul routeur fils, attende quelques instants avant de transmettre à son propre routeur père sa demande de retrait de l'arborescence. En effet, l'interruption d'un lien peut être momentanée, et par exemple résulter d'un léger déplacement du routeur fils ou père.

Dans ce cas, le routeur père peut déclencher une temporisation programmée sur une durée choisie, par exemple égale à 500 ms, dès qu'il détecte l'interruption du lien avec son fils. Lorsque le temps écoulé est égal à la durée choisie, le routeur père transmet alors sa demande de retrait.

Le procédé selon l'invention peut également permettre de mettre en oeuvre un mécanisme de prédiction d'interruption de lien entre routeurs père et fils.

En effet, dans certaines situations, par exemple lorsque l'un des routeurs qui participent à l'arborescence hiérarchisée se déplace, les signaux qu'il transmet sur un lien de l'arborescence hiérarchisée parviennent avec une intensité de plus en plus faible au niveau du routeur voisin qui est situé à l'autre extrémité de ce lien. Lorsque l'intensité des signaux reçus par l'un des deux routeurs concernés devient inférieure à un premier seuil S1, le lien est interrompu. Dans un réseau classique, on doit alors effectuer une renégociation de l'arborescence hiérarchisée complète.

Le mécanisme prédictif proposé permet de créer un ou plusieurs nouveaux liens au sein d'une arborescence hiérarchisée, de manière anticipée, à partir du routeur fils concerné (comme dans le cas décrit ci-avant en référence aux figures 4A et 4B), afin d'éviter que des paquets de données soient perdus lors de l'interruption réelle du lien et/ou que du temps soit inutilement perdu pendant la phase de reformation de l'arborescence consécutive à l'interruption d'un lien.

A cet effet, chaque routeur participant à une arborescence hiérarchisée peut être chargé d'analyser l'intensité des signaux qui proviennent de chacun de ses routeurs père, au moins, puis de comparer ces intensités à un second seuil S2 choisi. Ainsi, lorsqu'un routeur fils détecte qu'une intensité est inférieure au second seuil choisi S2 sur le lien établi avec son routeur père voisin, ledit routeur fils est autorisé à transmette à un autre routeur voisin, différent de son routeur père voisin, une demande de participation à l'arborescence.

Cette opération de transmission et les opérations consécutives sont alors identiques à celles décrites précédemment en référence aux figures 4A et 4B. Elles ont pour objectif de recréer un ou plusieurs liens dans la partie supérieure de l'arborescence hiérarchisée, située entre le routeur fils concerné et le routeur source RS.

Il est par ailleurs avantageux que le routeur fils qui détecte une intensité inférieure au second seuil S2 et supérieure au premier seuil S1 sur un lien avec son routeur père, attende quelques instants avant de transmettre à un autre routeur père voisin sa demande de participation à l'arborescence. En effet, la baisse d'intensité sur un lien peut être momentanée, et par exemple résulter d'un léger déplacement du routeur fils ou père.

Dans ce cas, le routeur fils peut déclencher une temporisation programmée sur une durée choisie, par exemple égale à 500 ms, dès qu'il détecte une intensité inférieure au second seuil S2 et supérieure au premier seuil S1. Lorsque le temps écoulé est égal à la durée choisie, le routeur fils transmet alors sa demande de participation à un autre routeur père voisin.

Bien entendu, si le routeur fils s'aperçoit, lors de ses comparaisons (qui ne s'interrompent pas), que l'intensité du signal sur le lien en cours d'interruption, redevient supérieure au second seuil S2, alors cela interrompt le comptage au niveau de la temporisation. La temporisation repasse alors à la valeur zéro (0). On peut par ailleurs envisager que la temporisation ne repasse pas à la valeur 0 et ne soit arrêté qu'à condition que le signal repasse au dessus du second seuil S2 pendant un délai supérieur à une seconde durée T2 définie par une autre temporisation. Cela permet d'être moins sensible à l'environnement radioélectrique et aux diverses réflexions des ondes.

La mise en oeuvre du procédé selon l'invention peut se faire au moyen d'un dispositif de traitement implanté dans chaque routeur et réalisé sous la forme de circuits électroniques, de modules logiciels (ou informatiques), ou d'une combinaison de circuits et de logiciels.

L'invention ne se limite pas aux modes de réalisation de procédé de génération d'arborescences hiérarchisées décrits ci-avant, seulement à titre d'exemple, mais elle englobe toutes les variantes que pourra envisager l'homme de l'art dans le cadre des revendications ci-après.

## Revendications

1. Procédé de génération d'une arborescence hiérarchisée de type « fils/père » pour effectuer un routage point à multipoint dans un réseau de communications ad hoc de type MANET, dans lequel chaque fois qu'un routeur « fils » (RR, R) dudit réseau veut faire partie d'une arborescence hiérarchisée associée à un routeur source (RS), ledit routeur fils transmet une demande de participation ayant pour résultat de l'associer à un routeur « père » voisin (R) dudit routeur fils dans le réseau, **caractérisé en ce que** ledit procédé est mis en oeuvre dans un réseau utilisant un protocole de routage proactif point à multipoints, ledit routeur fils utilisant sa connaissance de la topologie du réseau pour déterminer ledit routeur père en tant que routeur voisin mieux placé que ledit routeur fils sur un chemin de routage jusqu'au routeur source, ladite demande de participation étant transmise par le routeur fils audit routeur père voisin (R), en mode point à point, ladite demande de participation désignant ledit routeur source (RS).

2. Procédé selon la revendication 1, **caractérisé en ce que** :
a) si ledit routeur père voisin est déjà associé à un autre routeur fils dudit réseau, on associe ledit routeur fils demandeur audit routeur père voisin, de manière à le faire participer à ladite arborescence, et on incrémente d'une unité au niveau dudit routeur père voisin la valeur d'une information d'état représentative du nombre de routeurs fils qui lui sont associés, et
b) si ledit routeur père voisin n'est pas déjà associé à un autre routeur fils dudit réseau, on associe ledit routeur fils demandeur audit routeur père voisin et on place à la valeur « un » ladite information d'état dudit routeur père voisin, puis on fait transmettre en mode point à point, par ledit routeur père voisin, à un autre routeur voisin dudit réseau, constituant à son tour un père pour ledit routeur père voisin, une demande de participation désignant ledit routeur source (RS), puis
c) on réitère l'opération a) ou l'opération b) avec ledit routeur père voisin récepteur d'une demande de participation selon qu'il est ou n'est pas lui-même déjà associé à un autre routeur fils dudit réseau.

3. Procédé selon l'une des revendications 1 et 2, **caractérisé en ce que**, lorsqu'un routeur (RR, R) ne souhaite plus participer à ladite arborescence, du fait qu'il n'est plus associé à un routeur fils, ledit routeur transmet à son routeur père voisin une demande de retrait en mode point à point.

4. Procédé selon la revendication 3, **caractérisé en ce que** :
i. si ledit routeur père voisin est associé à au moins deux routeurs fils dudit réseau, on désassocie ledit routeur demandeur dudit routeur père voisin, de sorte qu'il ne participe plus à ladite arborescence, et on décrémente d'une unité au niveau dudit routeur père voisin la valeur de son information d'état représentative du nombre de routeurs fils qui lui sont associés, et
ii. si ledit routeur père voisin n'est associé qu'audit routeur fils demandeur, on désassocie ledit routeur fils demandeur dudit routeur père voisin et on place à la valeur « zéro » ladite information d'état dudit routeur père voisin, puis on fait transmettre en mode point à point, par ledit routeur père voisin, à son propre routeur père voisin, une demande de retrait de ladite arborescence en mode point à point, puis
iii. on réitère l'opération i) ou l'opération ii) avec ledit routeur père voisin récepteur d'une demande de retrait selon qu'il est lui-même associé à au moins deux routeurs fils ou à un seul routeur fils.

5. Procédé selon l'une des revendications 1 à 4, **caractérisé en ce que**, lorsqu'un lien, matérialisant une association entre un routeur père et un routeur fils, est interrompu, ledit routeur fils transmet, en mode point à point, une demande de participation désignant ledit routeur source (RS) à un autre routeur voisin dudit réseau, de manière à lui être associé, ce routeur voisin constituant alors un nouveau routeur père voisin pour ledit routeur fils.

6. Procédé selon la revendication 5, **caractérisé en ce que**:
I) si ledit nouveau routeur père voisin est déjà associé à un autre routeur fils dudit réseau, on associe ledit routeur fils demandeur à son nouveau routeur père voisin, de manière à le faire participer à ladite arborescence, et on incrémente d'une unité au niveau dudit nouveau routeur père voisin la valeur de son information d'état représentative du nombre de routeurs fils qui lui sont associés, et
II) si ledit nouveau routeur père voisin n'est pas déjà associé à un autre routeur fils dudit réseau, on associe ledit routeur fils demandeur audit nouveau routeur père voisin et on place à la valeur « un » ladite information d'état dudit nouveau routeur père voisin, puis on fait transmettre en mode point à point, par ledit nouveau routeur père voisin, à un autre routeur voisin dudit réseau, constituant à son tour un père pour ledit nouveau routeur père voisin, une demande de participation désignant ledit routeur source (RS), puis
III) on réitère l'opération I) ou l'opération II) avec ledit routeur père voisin récepteur d'une demande de participation selon qu'il est ou n'est pas lui-même déjà associé à un autre routeur fils dudit réseau.

7. Procédé selon l'une des revendications 5 et 6, **caractérisé en ce que** lorsque ledit lien, matérialisant une association entre un routeur père et un routeur fils, est interrompu, ledit routeur père transmet, en mode point à point, une demande de retrait de ladite arborescence à son routeur père voisin.

8. Procédé selon la revendication 7, **caractérisé en ce que** l'on compte au niveau dudit routeur père le temps écoulé depuis le début de ladite interruption de lien, de manière à ne transmettre ladite demande de retrait qu'une fois une première durée choisie écoulée.

9. Procédé selon l'une des revendications 1 à 8, **caractérisé en ce que** l'on analyse au niveau de chaque routeur de ladite arborescence l'intensité des signaux provenant de son routeur père, puis on compare lesdites intensités à un seuil choisi, de sorte qu'en cas de détection au niveau d'un routeur fils d'une intensité inférieure audit seuil sur un lien avec son routeur père voisin, ledit routeur fils transmette à un routeur voisin différent de son routeur père voisin une demande de participation à ladite arborescence.

10. Procédé selon la revendication 9, **caractérisé en ce que** l'on compte au niveau dudit routeur fils le temps écoulé depuis le début d'une détection d'intensité inférieure au seuil, de manière à ne transmettre ladite demande de participation qu'une fois une seconde durée choisie écoulée.

11. Procédé selon l'une des revendications 2 à 10, **caractérisé en ce que** ladite demande de participation et/ou ladite demande de retrait comporte une adresse de type « unicast » désignant ledit routeur source et une adresse de groupe de type « multicast ».

12. Procédé selon l'une des revendications 1 à 11, **caractérisé en ce que** ledit protocole de routage proactif point à multipoints de type MANET est choisi dans un groupe comprenant au moins les protocoles TBRPF et OLSR.

## Claims

1. A process for generating a "child/parent" type hierarchical tree to carry out a point-to-multipoint routing in a MANET type ad-hoc communication network, in which each time that a "child" router (RR, R) of said network wishes to join a hierarchical tree associated with a source router (SR), said child router sends a join message that associates said child router with a neighboring "parent" router (R) of said child router in the network, **characterized in that** said process is used in a network that uses a point-to-multipoint proactive routing protocol, said child router using its knowledge of the network topology to determine said parent router as a neighboring router better placed that said child router on a routing path to the source router, said join message being transmitted by said child router to said neighboring parent router (R) in point-to-point mode, said join message denoting said source router (SR).

2. Process according to claim 1, **characterized in that**:
a) if said neighboring parent router is already associated with another child router of said network, said requesting child router is associated with said neighboring parent router, in order to join it to said tree, and the value of the state information representative of the number of child routers associated with said neighboring parent router is incremented by one unit,
b) if said neighboring parent router is not already associated with another child router of said network, said requesting child router is associated with said neighboring parent router and said state information of said neighboring parent router is set equal to the value "one", said neighboring parent router is then made to transmit a join message designating said source router (SR) in point-to-point mode, to another neighboring router in said network, which in its turn constitutes a parent for said neighboring parent router,
c) operation a) or operation b) is then repeated with said neighboring parent router receiving a join message, depending on whether or not it is already associated with another child router of said network.

3. Process according to claim 1 or 2, **characterized in that** if a router (RR, R) no longer wishes to belong to said tree, since it is no longer associated with a child router, said router transmits a prune message to its neighboring parent router in point-to-point mode.

4. Process according to claim 3, **characterized in that**:
i. if said neighboring parent router is associated with at least two child routers of said network, said requesting router is disassociated from said neighboring parent router so that it no longer belongs to said tree, and the value of said neighboring parent router's state information representative of the number of child routers associated with it, is decremented by one unit,
ii. if said neighboring parent router is only associated with said requesting child router, said requesting child router is disassociated from said neighboring parent router and said state information of said neighboring parent router is set equal to the value zero. A message for pruning from said tree is then transmitted by said neighboring parent router, to its own neighboring parent router, in point-to-point mode,
iii. operation i) or operation ii), depending on whether it is associated with at least two child routers or with a single child router, is then repeated with said neighboring parent router receiving a prune message.

5. Process according to one of claims 1 to 4, **characterized in that** when a link embodying an association between a parent router and a child router is interrupted, said child router transmits a join message designating said source router (SR), in point-to-point mode, to another neighboring router in said network, in order to be associated with it. This neighboring router then becomes a new neighboring parent router for said child router.

6. Process according to claim 5, **characterized in that**:
I) if said neighboring parent router is already associated with another child router of said network, said requesting child router is associated with its new neighboring parent router, in order to join it to said tree, and the value of said new neighboring parent router's state information representative of the number of child routers associated with it is incremented by one unit,
II) if said new neighboring parent router is not already associated with another child router of said network, said requesting child router is associated with said new neighboring parent router and said state information of said new neighboring parent router is set equal to the value "one". Said new neighboring parent router is then made to transmit a join message in point-to-point mode, designating said source router (SR), to another neighboring router in said network, which in turn becomes a parent for said new neighboring parent router, then
III) operation I) or operation II) is then repeated with said neighboring parent router receiving a join message, depending on whether or not it is already associated with another child router of said network.

7. Process according to one of claims 5 and 6, **characterized in that** when said link embodying an association between a parent router and a child router is interrupted, said parent router transmits a message for pruning from said tree to its neighboring parent router, in point-to-point mode.

8. Process according to claim 7, **characterized in that** the time elapsed since the start of said link interruption is counted by said parent router, so that said prune message is only transmitted once a first chosen duration has elapsed.

9. Process according to one of claims 1 to 8, **characterized in that** at the level of each router of said tree the intensity of signals originating from its parent router is analyzed, then said intensities are compared with a chosen threshold, so that if an intensity below said threshold is detected by a child router on a link with its neighboring parent router, said child router transmits a message to join said tree to a neighboring router other than its neighboring parent router.

10. Process according to claim 9, **characterized in that** the time elapsed since a signal intensity first fell below the threshold is counted by said child router, so that said join message is only transmitted once a second chosen duration has elapsed.

11. Process according to one of claims 2 to 10, **characterized in that** said join message and/or said prune message includes a "unicast" type address designating said source router and a "multicast" type group address.

12. Process according to one of claims 1 to 11, **characterized in that** said MANET type point-to-multipoint proactive routing protocol is chosen from a group containing at least the TBRPF and OLSR protocols.

## Patentansprüche

1. Verfahren zur Generierung einer Baumhierarchie des Typs "Sohn/Vater" zur Durchführung einer Punkt-zu-Mehrpunkt-Leitweglenkung in einem MANET-Ad-hoc-Kommunikationsnetz, bei dem jedes Mal, wenn ein "Sohn"-Router (RR, R) des Netzes Teil einer Baumhierarchie sein möchte, die einem Quell-Router (RS) zugeordnet ist, dieser Sohn-Router eine Teilnahmeanforderung überträgt, die zur Folge hat, dass er einem benachbarten "Vater"-Router (R) dieses Sohn-Routers in dem Netz zugeordnet wird, **dadurch gekennzeichnet, dass** das Verfahren in einem Netz angewendet wird, welches ein proaktives Punkt-zu-Multipunkt-Leitweglenkungsprotokoll verwendet, wobei der Sohn-Router seine Kenntnis der Topologie des Netzes nutzt, um denjenigen Vater-Router als benachbarten Router zu bestimmen, welcher auf dem Leitweg bis zum Quell-Router an einer besseren Position angeordnet ist als der Sohn-Router, wobei die Teilnahmeanforderung vom Sohn-Router an den benachbarten Vater-Router (R) im Punkt-zu-Punkt-Modus übertragen wird und wobei die Teilnahmeanforderung den Quell-Router (RS) angibt.

2. Verfahren nach Anspruch 1, **dadurch gekennzeichnet, dass**:
a) wenn der benachbarte Vater-Router bereits einem anderen Sohn-Router des Netzes zugeordnet ist, der anfordernde Sohn-Router dem benachbarten Vater-Router so zugeordnet wird, dass dieser sich an der bereits vorher bestehenden Baumstruktur beteiligt, und [**dadurch**, **dass**] auf der Ebene des benachbarten Vater-Routers der Wert einer Statusinformation, die für die Anzahl der ihm zugeordneten Sohn-Router repräsentativ ist, um eins erhöht wird; und
b) wenn der benachbarte Vater-Router nicht bereits einem anderen Sohn-Router des Netzes zugeordnet ist, der anfordernde Sohn-Router dem benachbarten Vater-Router zugeordnet wird und die Statusinformation des benachbarten Vater-Routers auf den Wert "eins" gesetzt wird, und [**dadurch**, **dass**] anschließend veranlasst wird, dass eine Teilnahmeanforderung, welche den Quell-Router (RS) angibt, im Punkt-zu-Punkt-Modus von dem benachbarten Vater-Router an einen anderen benachbarten Vater-Router des Netzes übertragen wird, der seinerseits einen Vater für den benachbarten Vater-Router darstellt; und anschließend
c) der Vorgang a) oder der Vorgang b) mit dem benachbarten Vater-Router, der eine Teilnahmeanforderung empfängt, wiederholt wird, und zwar je nachdem, ob er selbst bereits einem anderen Sohn-Router des Netzes zugeordnet ist oder nicht.

3. Verfahren nach einem der Ansprüche 1 und 2, **dadurch gekennzeichnet, dass** dann, wenn ein Router (RR, R) nicht länger an einer Baumstruktur teilzunehmen wünscht, weil er nicht länger einem Sohn-Router zugeordnet ist, dieser Router an seinen benachbarten Vater-Router eine Rückzugsanforderung im Punkt-zu-Punkt-Modus überträgt.

4. Verfahren nach Anspruch 3, **dadurch gekennzeichnet, dass**:
i. wenn der benachbarte Vater-Router mindestens zwei Sohn-Routern des Netzes zugeordnet ist, die Zuordnung des anfordernden Routers zum benachbarten Vater-Router so aufgehoben wird, dass er nicht länger an der Baumstruktur beteiligt ist, und [**dadurch**, **dass**] auf der Ebene des benachbarten Vater-Routers der Wert seiner Statusinformation, die für die Anzahl der ihm zugeordneten Sohn-Router repräsentativ ist, wird um eins heruntergesetzt wird;
ii. wenn der benachbarte Vater-Router nur dem anfordernden Sohn-Router zugeordnet ist, die Zuordnung des anfordernden Sohn-Routers zum benachbarten Vater-Router aufgehoben wird, und [**dadurch**, **dass**] der Wert der Statusinformation des benachbarten Vater-Routers auf "null" gesetzt wird; anschließend wird veranlasst, dass eine Rückzugsanforderung aus der Baumstruktur im Punkt-zu-Punkt-Modus von dem benachbarten Vater-Router an seinen eigenen benachbarten Vater-Router übertragen wird; anschließend
iii. wird der Vorgang i) oder der Vorgang ii) mit dem benachbarten Vater-Router, der eine Rückzugsanforderung empfängt, wiederholt, je nachdem, ob er selbst mindestens zwei Sohn-Routern oder einem einziger Sohn-Router zugeordnet ist.

5. Verfahren nach einem der Ansprüche 1 bis 4, **dadurch gekennzeichnet, dass** dann, wenn eine Verbindung, die eine Zuordnung zwischen einem Vater-Router und einem Sohn-Router kennzeichnet, unterbrochen ist, der Sohn-Router im Punkt-zu-Punkt-Modus eine Teilnahmeanforderung, die den Quell-Router (RS) angibt, an einen anderen benachbarten Router des Netzes in der Weise sendet, dass er diesem zugeordnet wird, wobei dieser benachbarte Router dann einen neuen benachbarten Vater-Router für den Sohn-Router darstellt.

6. Verfahren nach Anspruch 5, **dadurch gekennzeichnet, dass**:
I) wenn der neue benachbarte Vater-Router bereits einem andren Sohn-Router des Netzes zugeordnet ist, der anfordernde Sohn-Router seinem neuen Vater-Router so zugeordnet wird, dass dieser sich an der Baumstruktur beteiligt, und [**dadurch**, **dass**] auf der Ebene des neuen benachbarten Vater-Routers der Wert seiner Statusinformation, die für die Anzahl der ihm zugeordneten Sohn-Router repräsentativ ist, um eins erhöht wird; und
II) wenn der neue benachbarte Vater-Router nicht bereits einem Sohn-Router des Netzes zugeordnet ist, der anfordernde Sohn-Router dem neuen benachbarten Vater-Router zugeordnet wird, und [**dadurch**, **dass**] auf der Ebene des benachbarten neuen Vater-Routers der Wert seiner Statusinformation auf "eins" gesetzt wird; anschließend wird veranlasst, dass eine Teilnahmeanforderung, in der der Quell-Router (RS) angegeben wird, im Punkt-zu-Punkt-Modus von dem neuen benachbarten Vater-Router an einen anderen benachbarten Router des Netzes, der in diesem Fall seinen Vater darstellt, übertragen wird; anschließend
III) der Vorgang I) oder der Vorgang II) mit dem benachbarten Vater-Router, der eine Teilnahmeanforderung empfängt, wiederholt wird, und zwar je nachdem, ob er selbst bereits einem anderen Sohn-Router des Netzes zugeordnet ist oder nicht.

7. Verfahren nach einem der Ansprüche 5 und 6, **dadurch gekennzeichnet, dass** dann, wenn die Verbindung, die eine Zuordnung zwischen einem Vater-Router und einem Sohn-Router kennzeichnet, unterbrochen ist, der Vater-Router im Punkt-zu-Punkt-Modus eine Rückzugsanforderung von der Baumstruktur an seinen benachbarten Vater-Router überträgt.

8. Verfahren nach Anspruch 7, **dadurch gekennzeichnet, dass** auf der Ebene des Vater-Routers die Zeit gezählt wird, die seit dem Beginn einer Verbindungsunterbrechung verstrichen ist, sodass die Rückzugsanforderung nur unter der Bedingung übertragen wird, dass eine erste gewählte Zeitdauer abgelaufen ist.

9. Verfahren nach einem der Ansprüche 1 bis 8, **dadurch gekennzeichnet, dass** auf der Ebene jedes Routers der Baumstruktur die Stärke der Signale analysiert wird, die von seinem Vater-Router stammen, und dass anschließend die Stärken mit einem gewählten Schwellenwert verglichen werden, sodass für den Fall, dass auf der Ebene eines Sohn-Routers auf einer Verbindung zu seinem benachbarten Vater-Router eine Stärke unterhalb des Schwellenwertes erkannt wird, der Sohn-Router an einen von seinem benachbarten Vater-Router verschiedenen benachbarten Router eine Anforderung zur Teilnahme an der Baumstruktur überträgt.

10. Verfahren nach Anspruch 9, **dadurch gekennzeichnet, dass** auf der Ebene des Sohn-Routers die seit dem Beginn der Erkennung einer Stärke unterhalb des Schwellwertes verstrichene Zeit gezählt wird, sodass die Teilnahmeanforderung erst übertragen wird, nachdem eine zweite gewählte Dauer abgelaufen ist.

11. Verfahren nach einem der Ansprüche 2 bis 10, **dadurch gekennzeichnet, dass** die Teilnahmeanforderung und/oder die Rückzugsanforderung eine "Unicast"-Adresse umfasst, welche den Quell-Router angibt, und eine "Multicast"-Gruppen-adresse.

12. Verfahren nach einem der Ansprüche 1 bis 11, **dadurch gekennzeichnet, dass** das proaktive MANET-Punkt-zu-Punkt-Leitweglenkungsprotokoll aus einer Gruppe gewählt wird, die mindestens die Protokolle TBRPF und OLSR umfasst.
